# EUROPÄISCHE PATENTSCHRIFT

(11) **EP 2 160 941 B1**
(45) Veröffentlichungstag und Bekanntmachung des Hinweises auf die Patenterteilung: **04.04.2012**
(21) Anmeldenummer: 09169803.5
(22) Anmeldetag: 09.09.2009
(51) Int. Cl.: A01K 1/06

(54) **Einsperrgitter für Großvieh**
Stanchion for large livestock
Cornadis pour bétail grande

(30) Priorität: 09.09.2008 DE 102008046376; 22.10.2008 DE 102008052755
(43) Veröffentlichungstag der Anmeldung: 10.03.2010
(73) Patentinhaber: Braun GmbH, 83620 Feldkirchen/Westerham (DE)
(72) Erfinder: Braun, Hans, 83620 Feldkirchen-Westerham (DE)
(74) Vertreter: Alber, Norbert

(56) Entgegenhaltungen:
- DE-A1- 2 632 057
- FR-A1- 2 580 464
- FR-A1- 2 778 528
- GB-A- 1 113 731
- US-A- 4 976 224

## Beschreibung

Die Erfindung betrifft Einsperrgitter für vor allem Großvieh, insbesondere in der Bauform als Selbstfanggitter.

### II. Technischer Hintergrund

Derartige Selbstfanggitter besitzen drei Funktionsstellungen, nämlich neben der Offenstellung, in der die Tiere den Kopf jederzeit durch das Gitter stecken als auch wieder zurückziehen können, und der Einsperrstellung, in der der Hals der Tiere so eng umfasst ist, dass sie ihren Kopf nicht mehr aus dem Gitter zurückziehen können, und die vor allem zum Melken der Kühe in dieser fixierten Position dient, eine so genannte Fangstellung oder auch Bereitschaftsstellung:

Deren Zweck besteht darin, dass die Kuh, die ansonsten im Stall und meist auch in der angeschlossenen Weidefläche frei herumlaufen kann, angelockt durch das frisch jenseits des Gitters ausgelegte Futter, den Kopf durch das in der Fangstellung befindliche Einsperrgitter steckt und danach nach unten in Richtung Futtertrog absenkt, und genau durch dieses Absenken das Einsperrgitter von der Fangstellung in die Einsperrstellung bewegt, und sich selbst einsperrt.

Auf diese Art und Weise sperren sich die Tiere - nachdem das gesamte Einsperrgitter über alle nebeneinander befindlichen Boxenplätze auf Fangstellung gestellt wurde - nacheinander selbst ein, wenn sie zum Fressen kommen, so dass mit dem Melken begonnen werden kann.

Ein solches Einsperrgitter mit Selbstfangfunktion beschreibt beispielsweise die EP 0 620 968. Zwischen horizontalen Tragrohren sind vertikal einerseits Festrohre verschraubt, andererseits Basisrohre verschwenkbar unten befestigt, an denen wiederum Fangrohre verschwenkbar befestigt sind. Dabei können die Fangrohre die drei beschriebenen Stellungen einnehmen, während bei den Basisrohren Fang- und Einsperrstellung identisch ist.

Neben den beschriebenen Grundfunktionen müssen derartige Einsperrgitter jedoch weitere Erfordernisse erfüllen:
- Neben der erforderlichen Stabilität ist dies vor allem hohe Sicherheit gegen Verletzung der Tiere, vor allem an vorstehenden Elementen und scharfen Kanten, vor allem auf der vom Trog abgewandten Seite und nahe des Halskanals, indem die Kuh auch in der Einsperrstellung den Hals von unten nach oben bewegen kann.
- Die Verkleinerung vorhandener Freiräume im Einsperrgitter, insbesondere zwischen den einzelnen Einsperrboxen soweit, dass die Kuh möglichst weder den Kopf noch ein Bein durch einen solchen Freiraum stecken kann und wenn doch, sich dann selbst befreien kann und beim eigenen Befreien nicht verletzt.
- Die zuverlässige Funktion des Selbstfangens.
- Die einfache und kostengünstige Herstellbarkeit und das Verhindern von Verhaken von Halsbändern oder Nasenringen der Tiere in Elementen des Einsperrgitters.
- Die einfache Einstellbarkeit des Einsperrgitters auf unterschiedliche Tierabmessungen.

Auch die US 4976224 offenbart ein Selbstfanggitter mit Selbstfangfunktion gemäß dem Oberbegriff des Anspruches 1.

Weiterhin ist aus der FR 2778528 ein Selbstfanggitter bekannt, bei dem am Fangrohr ein Zusatzgewicht angeordnet ist, mit dem dort allerdings der Schwerpunkt des Fangrohres so beeinflusst wird, dass sich das Fangrohr in die Fangstellung bewegt.

Des Weiteren ist aus der DE 2632057 A1 ein Selbstfanggitter bekannt, bei dem eine quer verlaufende Sperrstange in der Höhe verschwenkbar am Einsperrgitter befestigt ist als Hochwerfverhinderung.

### III. Darstellung der Erfindung

### a) Technische Aufgabe

Es ist daher die Aufgabe gemäß der Erfindung, ein bekanntes Einsperrgitter in seinen Nebenfunktionen weiter zu verbessern, ohne den Herstellungsaufwand wesentlich zu erhöhen.

### b) Lösung der Aufgabe

Diese Aufgabe wird durch die Merkmale des Anspruches 1 gelöst. Vorteilhafte Ausführungsformen ergeben sich aus den Unteransprüchen.

Durch die Anordnung eines Zusatzgewichtes am Fangrohr auf der dem Basisrohr zugewandten Seite, bezogen auf den Lagerungspunkt des Fangrohres und oberhalb des Lagerungspunktes, wird der Schwerpunkt des Fangrohres in Richtung Basisrohr verlagert. Dadurch wird verhindert, dass z.B. bei Reibungserhöhung durch Verschmutzung im Lager zwischen Basisrohr und Fangrohr beim Verstellen des Einsperrgitters, also der Basisrohre, von Offenstellung in Fang-/Einsperrstellung das Fangrohr sich bereits in die Fangstellung mitbewegt, was nicht erwünscht ist.

Die Schwerpunktverlagerung wird durch die Anordnung des Zusatzgewichtes im Inneren des Fangrohres im Bereich seiner Kröpfung erreicht, was durch Anordnen eines massiven Metallstabes im Inneren des Fangrohres im Biegungsbereich noch vor dem Biegen des Fangrohres erreicht wird, welches dann dort fixiert wird durch gemeinsames Biegen von Fangrohr und massiver Metallstange im Inneren.

Durch eine U-förmige Gabel am unteren Ende des Fangrohres, deren frei endende Schenkel in jeder Stellung des Fangrohres das untere horizontale Tragrohr seitlich übergreifen, wird verhindert, dass sich Kühe mit ihrem Halsband auf dem freien unteren Ende des Fangrohres einfädeln und nicht mehr selbst befreien können.

Am oberen Ende des Fangrohres ist ebenfalls eine nach oben offene Gabel vorhanden, zwischen deren Schenkeln die Steuerstange verläuft. Da das Verrasten des Fangrohres hinter einer entsprechenden Nase der Steuerstange durch einen Bolzen geschieht, der höhenverschiebbar in zwei in Verlaufsrichtung der oberen Enden des Fangrohres vorhandenen fluchtenden Langlöchern in den beiden Gabelschenkeln verschiebbar ist, kann bei einer tiefen Stellung des Bolzens jeder Schenkel so weit nach oben über die Steuerstange und den Querbolzen hinausstehen, dass sich eine Kuh darin mit ihrem Nasenring verfangen kann.

Um dies zu verhindern, wird auf das obere Ende der Gabel des Fangrohres eine Brücke aufgesetzt, die die beiden freien Enden verbindet, so dass hier kein Auffädeln eines Nasenringes mehr möglich ist.

Gleiches ist bei Bedarf auch auf die nach unten gerichtete untere Gabel des Fangrohres möglich, sofern auch hier die freien Gabelschenkel lang genug sind, dass sie in jeder Funktionsstellung über die Unterseite des unteren Tragrohres vorstehen.

Eine solche Brücke muss natürlich auf der Gabel gesichert sein, beispielsweise mittels einer hindurchgesteckten Sicherungsschraube oder einem Sicherungsbolzen.

Die Herstellung des Einsperrgitters wird vereinfacht, wenn das Gelenk am unteren Ende des Basisrohres gegenüber dem unteren Tragrohr nicht seitlich neben dem Basisrohr angeordnet wird, sondern sich der Gelenkbolzen durch das untere Ende des Basisrohres hindurch erstreckt.

Um den Schwenkpunkt dieses Gelenkes bezüglich des Schwerpunktes des Basisrohres in die richtige Relativlage zu bringen, kann die untere Biegung des Basisrohres zu diesem Zweck etwas stärker ausgeführt werden, also bis zu einem kleineren Innenwinkel, als dies bei neben dem Basisrohr liegender Lagerung erforderlich wäre.

Um das Verletzungsrisiko für die Kuh zu verringern, wird vorzugsweise der U-förmige Lagerbock, mit dessen Hilfe die Lagerung zwischen Basisrohr und Fangrohr realisiert ist, mit seinem verbindenden Schenkel nicht am Basisrohr, sondern an der dem Basisrohr zugewandten Seite des Fangrohres angeschweißt, so dass seine freien Schenkel in Richtung Basisrohr ragen und dieses seitlich übergreifen.

Dadurch befindet sich sowohl der Lagerbolzen mit seinen vorstehenden, meist durch eine Mutter gesicherten, Enden als auch die Kanten des freien Endes des Lagerbockes weiter von dem Halskanal der Kuh entfernt, der durch das Fangrohr einerseits und das Festrohr andererseits seitlich begrenzt wird.

Um in einem Stall trotz gemeinsamer Ansteuerung des gesamten Einsperrgitters mittels der Steuerstange, z.B. in die Offenstellung, dennoch einige Kühe noch einzeln eingesperrt zu lassen, ist vorzugsweise jede Box mit einer Einzeleinsperrung ausgestattet, indem der verbindende Querbolzen zwischen dem oberen gabelförmigen Ende des Basisrohres und der Steuerstange auf einfache Art und Weise lösbar und herausziehbar, im eingesetzten Zustand jedoch formschlüssig darin gesichert ist.

Nach dem Herausziehen wird dieser Querbolzen in eine tiefer, nämlich knapp unter dem oberen Querrohr des Gitters, im Fangrohr vorhandene zweite Querbohrung eingesetzt, die so positioniert ist, dass dadurch dieses einzelne Fangrohr in seiner Einsperrstellungstellung durch Blockierung gehalten wird.

Der Querbolzen wird auf besonders einfache Art und Weise in seiner jeweiligen Position gesichert, indem er selbst wiederum von einem Sicherungsbolzen an einem Ende in Querrichtung durchdrungen wird, und parallel neben der Querbohrung im Basisrohr und/oder im Fangrohr für den Querbolzen außen an dem Basisrohr unterhalb der Einstecköffnung für den Querbolzen eine Hülse angeschweißt ist, in welche der mit dem oberen Teil im Querbolzen liegende und verschiebbare Sicherungsbolzen hineingesteckt werden kann.

Nach unten kann der Sicherungsbolzen nicht aus dem Querbolzen und der Hülse herausfallen, aufgrund wenigstens eines verdickten, beispielsweise durch eine Mutter gebildeten, Endes. Nach Herausziehen aus der Hülse nach oben kann der Querbolzen aus dem Basisrohr und der Steuerstange bzw. aus dem Fangrohr herausgezogen werden.

Ferner ist es bereits bekannt, an dem Festrohr einen meist U-förmigen Sperrbügel zu befestigen, der in Richtung des benachbarten Basisrohres ragt und zu der Hauptebene des Gitters so versetzt ist, dass das Basisrohr z.B. in der Offenstellung als auch in der Fangstellung mit diesem Sperrbügel überlappt.

Durch den Sperrbügel soll die Größe der freien Räume zwischen dem Festrohr und dem benachbarten Basisrohr so verkleinert werden, dass eine Kuh dort den Kopf nicht mehr hindurchstecken kann.

Dennoch geschieht es immer wieder, dass eine Kuh einen Fuß durch einen dieser verbleibenden Freiräume hindurchsteckt, und Schwierigkeiten hat, sich daraus wieder zu befreien. Dies ist vor allem dann der Fall, wenn der Freiraum, in den die Kuh ihren Fuß eingesteckt hat, sich von oben nach unten verjüngt, so dass der durch das Körpergewicht der Kuh sich herabsenkende Fuß immer stärker in den sich verengenden Keilraum gepresst wird, was der Kuh ein selbsttätiges Entfernen kaum mehr ermöglicht.

Um dies zuverlässiger zu verhindern, wird vorgeschlagen, den Sperrbügel nicht nur U-förmig, also mit einem vertikal verlaufenden, verbindenden Schenkel auszuführen, sondern diesen verbindenden Schenkel doppelt gekröpft mit parallel zueinander versetzten, oberen und unteren, Endbereichen auszuführen, wobei der verbindende Mittelbereich etwa parallel zum mittleren Bereich des Basisrohres in dessen Offenstellung oder Einsperr-/Fangstellung verläuft. Zusätzlich kann dann der innerhalb des Sperrbügels verbleibende Freiraum weiter unterteilt werden, beispielsweise von einer vom oberen Bereich des verbindenden Schenkels vertikal nach unten zum unteren Horizontalschenkel des Sperrbügels führenden weiteren Strebe.

Dadurch entstehen zwei Teilräume, von denen der zum Festrohr hin verbleibende Bereich von oben nach unten gleich breit ist und der benachbarte Bereich innerhalb des Sperrbügels sich in seiner Breite von oben nach unten sogar erweitert, wodurch das beschriebene Problem nicht mehr gegeben ist.

Aus dem gleichen Grund, nämlich ein Hindurchstecken eines Beines der Kuh zu verhindern, kann am Fangrohr oberhalb des Gelenkes zum Basisrohr hin ein Schließblech angeordnet werden, welches in Richtung der Hauptebene des Sperrgitters verläuft, jedoch bezüglich der Ebene von Fangrohr und Basisrohr versetzt auf einer Außenseite des Fangrohres angeschweißt ist.

Bei entsprechender Dimensionierung hintergreift ein solches Schließblech in jeder Funktionsstellung von Basisrohr und Fangrohr das Basisrohr und schließt damit die nach unten zum Gelenk hin enger werdende Lücke zwischen Basisrohr und Fangrohr. Dementsprechend besitzt ein solches Schließblech seine größte Breite etwa auf Höhe der Kröpfung des Fangrohres.

Um die Stallfläche vor dem Einsperrgitter für die einzelnen Kühe in einzelne Stellplätze zu unterteilen und das gegenseitige Behindern und Wegfressen von Futter zu vermeiden, werden zwischen den einzelnen Stellplätzen häufig Trennbügel montiert. Diese sind - da sie hohen Belastungen standhalten müssen - etwa winkelförmig gebogen und mit einem freien Ende im Boden des Stalles einbetoniert, mit dem etwa horizontal nach vorn ragenden anderen freien Ende mit dem Einsperrgitter verbunden.

Um dies zu erleichtern und sogar eine Nachrüstung zu ermöglichen, ragt von dem unteren Tragrohr, insbesondere dem Rohrstück, welches über das untere Tragrohr geschoben als Lagerbock für das untere Schwenkgelenk des Basisrohres dient, ein Rohrstutzen nach oben in den Freiraum zwischen Basisrohr und benachbartem Festrohr auf, auf welches von oben her ein solcher Trennbügel aufgesteckt werden kann.

Vor allem wenn ein solcher aufragender Stutzen nicht vorhanden ist, kann das Rohrstück, welches auf dem unteren Tragrohr aufgeschoben ist, in seiner Länge so weit verkürzt werden, dass gerade die Anbringung von zwei in Längsrichtung beabstandeten Gewindebohrungen und dementsprechend zwei Klemmschrauben gegenüber dem Tragrohr möglich ist, da die Klemmung mit nur einer einzigen Klemmschraube den Belastungen durch das Vieh nicht standhält.

Eine weitere Neuerung besteht darin, dass zur Verhinderung des schnellen Hochreißens des Kopfes der im Gitter gehaltenen Kuh Vorrichtungen im Gitter integriert sind, die die bisher hierzu verwendete schräge Montage des Gitters, also mit dem oberen Ende in Richtung Futtertrog geneigt, überflüssig machen.

Zu diesem Zweck werden ein oder mehrere - insbesondere in der Höhe am Gitter verstellbare - Anschlagteile so im oder unmittelbar neben dem Halskanal des in der Fangstellung befindlichen Einsperrgitters befestigt, dass die Kuh beim schnellen Hochreißen des Kopfes sich ihren Kopf oben anschlägt und dadurch dies für die Zukunft vermeidet, währen ein langsames nach oben bewegen ein Wegschwenken dieses Anschlagteiles bewirkt, so dass die Kuh problemlos die gewünschte hohe Kopfstellung einnehmen kann, jedoch nicht durch eine schnelle Wurfbewegung des Kopfes, mit der Kühe häufig im Maul befindliches Futter gezielt nach hinten über das Gitter hinweg werfen, wodurch es auf den Spaltboden fällt und nicht mehr nutzbar ist.

Die Form des Anschlagteiles kann dabei - sofern der beabsichtigte Zweck erfüllt wird - frei gewählt werden: ringförmig, U-förmig oder plattenförmig.

### c) Ausführungsbeispiele

Ausführungsformen gemäß der Erfindung sind im Folgenden beispielhaft näher beschrieben. Es zeigen:
- Fig. 1:: einen Ausschnitt aus einem Einsperrgitter mit mehreren Stellplätzen,
- Fig. 2:: eine vergrößerte Darstellung mit zusätzlichen Details an einem ein- zigen Stellplatz und
- Fig. 2a, b: Detaildarstellungen des Einsperrgitters,
- Fig. 3:: eine erste Wurfverhinderung und
- Fig. 4:: eine zweite Wurf-Verhinderung.

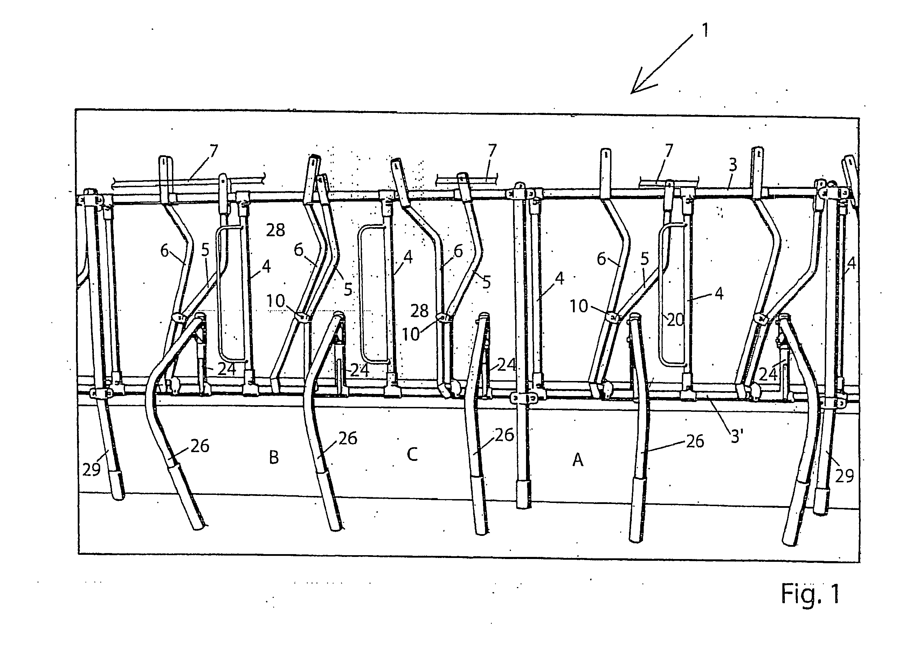

In Fig. 1 ist eine Version des Einsperrgitters in unterschiedlichen Funktionsstellungen der Boxen A, B, C nebeneinander dargestellt, die so in der Praxis an ein-und demselben Einsperrgitter kaum auftritt:

Das Einsperrgitter besteht aus einem oberen und unteren Tragrohr 3 bzw. 3', die in regelmäßigen Abständen durch fest dazwischen verschraubte Festrohre 4 miteinander verbunden sind, die zusammen den Rahmen 2 bilden. Die Tragrohre ihrerseits sind mittels Standrohren 29 in der richtigen Höhe über dem Untergrund, also dem Boden des Stalles, gehalten.

Die einzelnen Stellplätze A, B, C sind durch dazwischen montierte Trennbügel 26 gegeneinander abgetrennt, die winkelförmig ausgebildet sind und mit ihrem einen freien Ende nach unten in den Boden führen und mit dem nach vorn ragenden freien Ende an einem nach oben ragenden Stutzen 24 befestigt sind, der vom unteren Querrohr 3' aus nach oben ragt.

Das Wesentliche des Einsperrgitters sind die zwischen je zwei Festrohren vorhandenen Paare von Basisrohr 5 und Fangrohr 6:

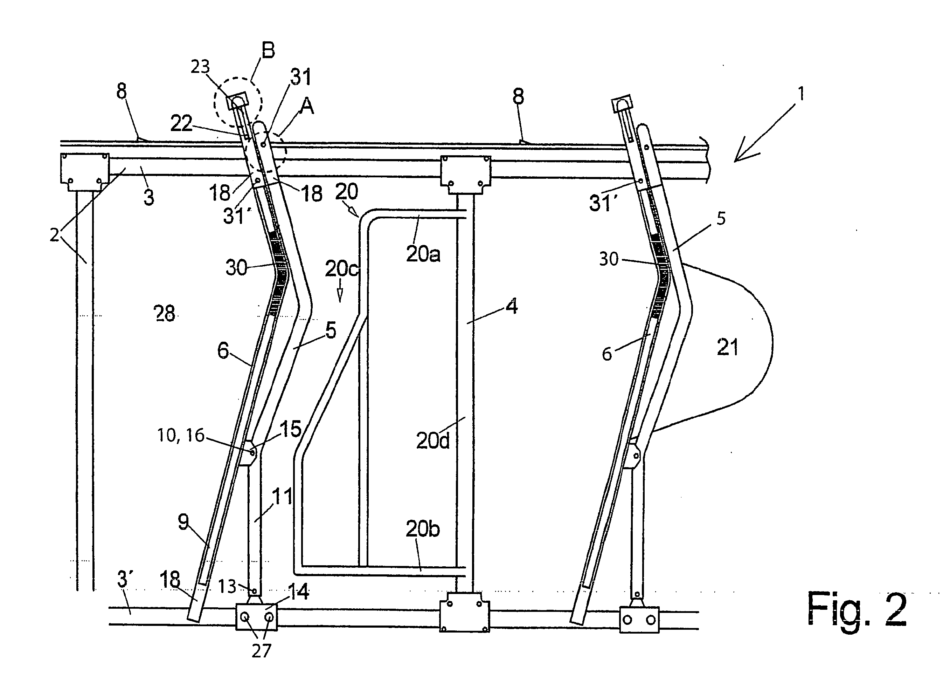

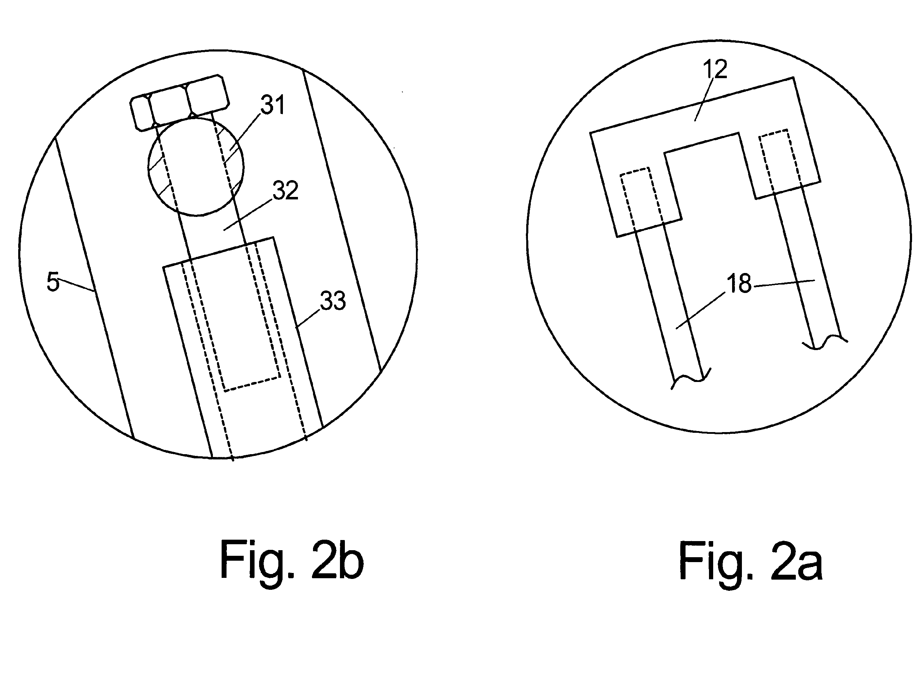

Jedes Basisrohr 5 ist - wie besser in der Einzeldarstellung eines Stellplatzes der Fig. 2 zu erkennen - mit seinem unteren Ende 11 mittels eines Schwenkgelenkes 13 entlang der Hauptebene des Einsperrgitters verschwenkbar, wobei das Basisrohr 5 ebenso wie das Festrohr 6 sich vom unteren Tragrohr 3' zum oberen Tragrohr 3 und über dieses hinaus erstreckt. Das obere Ende dieser beiden Rohre ist jeweils als nach oben offene U-Gabel 18 ausgeführt, zwischen deren Schenkeln das obere Tragrohr 3 verläuft, entlang welchem somit die oberen Enden dieser Rohre in Querrichtung entlang des Einsperrgitters geführt sind.

Oberhalb des oberen Tragrohres 3 verläuft die Steuerstange 7 über alle Stellplätze hinweg, die jeweils mit dem oberen Ende jedes Basisrohres 5 verbunden ist. Durch Hin- und Herschieben, also in den Fig. 1 und 2 von links nach rechts, können diese Basisrohre 5 mit ihrem oberen Ende verstellt werden, und zwar von einer Offenstellung, wie in Fig. 1 im Stellplatz A dargestellt, in eine Fang-/Einsperrstellung, in der das obere Ende des Basisrohres 5 so weit wie möglich vom Fangrohr 6 wegbewegt wird und sehr nahe an das nächste Festrohr 4 angenähert wird.

Da das Basisrohr 5 doppelt gekröpft ist mit jeweils einem stumpfem Innenwinkel, verlaufen der obere und untere Bereich des Basisrohres 5 annähernd vertikal, während der mittlere Bereich schräg nach oben ansteigend zum nächsten, vom Fangrohr 6 abgewandten, Festrohr 4 verläuft.

Im Bereich der unteren Kröpfung ist am Basisrohr 5 ein Fangrohr 6 ebenfalls schwenkbar in der Hauptebene des Einsperrgitters befestigt, welches ebenfalls an seinen Enden mit einer oberen und unteren U-förmigen Gabel die dortigen Tragrohre 3, 3' übergreift. Dies erfolgt mittels des U-förmigen Lagerbockes 15, dessen Querschenkel am Fangrohr 6 auf der Seite zum Basisrohr 5 hin angeschweißt ist, vorzugsweise jedoch nicht länger ist als das Fangrohr 6 dick ist. Die Endschenkel des Lagerbockes 15 greifen vorne und hinten über das Basisrohr 5, so dass der Lagerbolzen 16 durch die beiden Endschenkel als auch das Basisrohr gesteckt werden kann und das Schwenkgelenk 10 bildet.

Das Fangrohr 6 besitzt im oberen Bereich, etwa im oberen Drittel, eine Kröpfung, deren konvexe, äußere Wölbung zum Basisrohr 5 hin gerichtet ist. Die Offenstellung und Kröpfung des Basisrohres 5 ist dabei so gewählt, dass der in dieser Stellung am Bereich unterhalb des Schwenkgelenkes 10 das Basisrohr 6 an dem schräg nach oben zum Gelenk ansteigenden entsprechenden Teil des Basisrohres 5 anliegt, was dadurch erreicht wird, dass der Schwerpunkt des Basisrohres 6 sich bezüglich des Gelenkes 10 auf der dem Basisrohr 5 zugewandten Seite befindet.

Wie Fig. 1 zeigt, können die Basisrohre 5 von der im Stellplatz A dargestellten Offenstellung in eine zweite Stellung, nämlich die in den Boxen B und C dargestellte, übereinstimmende Fang-/Einsperrstellung mittels der Steuerstange 7 verschoben werden, die dadurch mit ihrem oberen Ende in Richtung Fangrohr 6 verschoben werden, so dass der Bereich des Basisrohres 5 unterhalb des Schwenkgelenkes 10 nicht mehr schräg nach unten, sondern etwa vertikal verläuft.

Da sich das Fangrohr 6 dabei mit seinem Schwerpunkt immer noch dem Basisrohr 5 zugeneigt befindet, liegt - siehe Box B - nunmehr das Fangrohr 6 oberhalb des Gelenkes 10 mit seiner Kröpfung fast in der oberen Kröpfung des Basisrohres 5 an, und auch die oberen Enden von Basisrohr 5 und Fangrohr 6 befinden sich nahe beisammen.

Dafür ragt das untere Ende des Fangrohres 6 unterhalb des Gelenkes 10 nunmehr schräg in den Freiraum zwischen unterem Teil des Basisrohres 5 und dem benachbarten Festrohrs 4 hinein, und zwar bis über dessen Mitte hinweg, wie in dem Stellplatz B zu erkennen.

Wenn nun in diesem Zustand, in dem sich das Basisrohr 5 in der übereinstimmenden Fang-/Einsperrstellung befindet, und das Fangrohr 6 in der Fangstellung, eine Kuh ihren Kopf durch den Halskanal 28 steckt, der im oberen Bereich hierfür breit genug ist, und anschließend den Kopf nach unten in Richtung Futter absenkt, drückt sie mit dem unteren Teil ihres Halses den Bereich des Fangrohres 6 unterhalb des Gelenkes 10 nach außen Richtung Basisrohr 5, wodurch sich der obere Teil des Fangrohres 6 in Richtung Festrohr 4 bewegt und damit in die Einsperrstellung, wie in Stellplatz C dargestellt. Dort verläuft der gesamte untere und mittlere Bereich des Fangrohres 6, also bis zu der im oberen Drittel liegenden Kröpfung hin, parallel zum Festrohr und begrenzt damit einen von unten bis zur Kröpfung im Fangrohr 6 gleichbleibend breiten Halskanal 28, der breit genug für den Hals der Kuh ist, aber schmaler als deren Kopf, so dass sie diesen nicht mehr aus dem Einsperrgitter zurückziehen kann.

Nach Verlagern des Fangrohres 6 in der Einsperrstellung verriegelt sich dieses selbsttätig in dieser Stellung am oberen Tragrohr 3.

In der Einzeldarstellung der Fig. 2 sind nun wesentliche Details der Erfindung besser zu erkennen:

Zum einen das untere Ende 9 des Fangrohres 6, welches ebenfalls als U-förmige Gabel 18' ausgebildet ist und das untere Tragrohr 3' beidseitig übergreift, um ein Einfädeln eines Halsbandes auf das untere Ende des Tragrohres 6 zu vermeiden.

Auf das freie Ende der Gabel 18 am oberen Ende des Fangrohres 6, aber auch des Basisrohres 5, kann eine Brücke 12 aufgesteckt sein, wie in Fig. 2a, der vergrösserten und um 90 Grad gedrehten Darstellung des Details A in Figur 2 und damit in einer Ansicht in Blickrichtung der Hauptebene des Gitters dargestellt, wodurch die freien Enden der beiden Gabelschenkel miteinander verbunden werden, so dass ein Auffädeln nicht mehr möglich ist. Gleiches könnte bei entsprechender Verlängerung der unteren Gabel 18' auch am unteren Ende erfolgen.

Um das Fangrohr 6 zuverlässig in seiner Fangstellung zu halten, und den Schwerpunkt möglichst weit horizontal in Querrichtung vom Punkt des Schwenkgelenkes 10 zu entfernen, ist im Inneren des Fangrohres 6 ein massiver Metallstab 30 im Bereich der oberen Kröpfung eingebracht und durch gemeinsames Verbiegen mit dem Fangrohr 6 fixiert sein.

Zusätzlich dazu kann an dem Fangrohr 6 ein Schließblech 21 angeschweißt sein, welches etwa im Bereich der oberen Kröpfung in Richtung Basisrohr 5 und darüber hinaus ragt, indem es parallel zur Hauptebene des Gitters etwas versetzt seitlich am Fangrohr 6 angeschweißt ist. Dies verlagert nicht nur den Schwerpunkt des Fangrohres 6 in die gewünschte Richtung, sondern schließt auch die vor allem in der Offenstellung und Fangstellung vorhandene Lücke zwischen Fangrohr 6 und Basisrohr 5 oberhalb des Schwenkgelenkes 10, und verhindert dort ein Hindurchstecken eines Fußes der Kuh.

In Fig. 2 ist ferner eine spezielle Form des Sperrbügels 20 dargestellt, dessen die Endschenkel 20a, b verbindender, vertikaler Querschenkel 20c nicht gerade verläuft, sondern doppelt gekröpft ist mit jeweils stumpfem Innenwinkel, so dass die oberen und unteren Enden parallel versetzt zueinander etwa vertikal verlaufen, und der Mittelbereich schräg gestellt ist, etwa entsprechend dem mittleren Bereich des benachbarten Basisrohres 5.

Zusätzlich ist zwischen dem oberen Bereich des Schenkels 20c und mit diesem fluchtend und in Verlängerung nach unten bis zum unteren Endschenkel 20b eine verlängernde Strebe 20d eingeschweißt. Durch den mit seinen Endschenkeln 20a, b am Festrohr 4 verschweißten Sperrbügel 20 werden somit Freiräume geschaffen, die zum einen sehr schmal sind und vor allem von oben nach unten entweder gleich breit oder sogar breiter werden und ein Verkeilen des Fußes der Kuh vermeiden.

Auch die Trennbügel 20 sind wie das Schließblech 21 parallel zur Hauptebene des Einsperrgitters versetzt, so dass in der Offenstellung - wie beispielsweise in Fig. 1 für eine konventionelle Form des Sperrbügels 20 sichtbar - vor allem in der Offenstellung in Box A das Basisrohr 5 den Sperrbügel 20 überlappt.

Fig. 2 und das dortige Detail B vergrößert in Fig. 2b zeigt weiterhin im oberen Endbereich eine sehr einfache Einzel-Einsperrung, also Blockierung in der Fangstellung, indem der quer zur Hauptebene des Gitters hindurchgesteckte Querbolzen 31, der zum Verbinden von Steuerstange 7 und dem U-förmigen oberen Ende des Basisrohres 5 quer durch beide hindurchgesteckt wird, zum Entkoppeln wieder herausgezogen und in einer tieferen Position 31' des Fangrohres 6 wieder in eine dortige Querbohrung eingesteckt werden kann.

Diese tiefere Position 31' liegt so hoch - wie am besten in Figur 2 zu erkennen - dass der Querbolzen dann unmittelbar unter dem oberen Tragrohr 3 verläuft. Dadurch kann das Fangrohr 6 nicht in die Offenstellung verschwenkt werden, da dann der Querbolzen in der Position 31' eine zunächst nach oben gerichtete, bogenförmige Bewegung vollziehen würde und sich dabei gegenüber der Unterseite des oberen Tragrohres 3 verklemmt.

Um die gekoppelte Stellung mit der Steuerstange 7 zu sichern, ist der Querbolzen 31 an einem Ende wiederum selbst von einem verschiebbaren Sicherungsbolzen 32 durchdrungen, der im Querbolzen 31 verschiebbar ist und an beiden Enden eine Verdickung in Form z.B. einer aufgeschraubten Mutter besitzt, wodurch er im Querbolzen 31 gehalten wird.

Unterhalb der Bohrung für den Querbolzen 31 befindet sich außen am Basisrohr 5 angeschweißt eine Hülse 33, in die im eingesteckten Zustand des Querbolzens 31 der Sicherungsbolzen 32 von oben her eingeführt und abgelegt werden kann.

Zum Entkoppeln ist das Hochziehen des Sicherungsbolzens 32 aus der Hülse 33 und das anschließende Herausziehen des Querbolzens 31 aus der Steuerstange 7 notwendig.

Um das nach hinten werfen von Futter durch schnelles Hochwerfen des Kopfes der Kuh - wenn sich deren Hals im Gitter befindet - zu verhindern, kann eine Hochwerf-Verhinderung am Einsperrgitter vorgesehen sein:

Das Prinzip besteht darin, dass die Kuh beim Hochreißen des Kopfes mit der Oberseite des Kopfes, vor allem den empfindlichen Ohren, an einem Teil des Gitters anschlägt, und deshalb zukünftig das Hochreißen des Kopfes vermeidet.

Es soll jedoch nur das schnelle Hochwerfen des Kopfes behindert werden, nicht das langsame nach oben bewegen, bis der Hals im oberen Ende des Halskanals 28 positioniert ist, da letzteres für das Wiederkäuen wichtig ist.

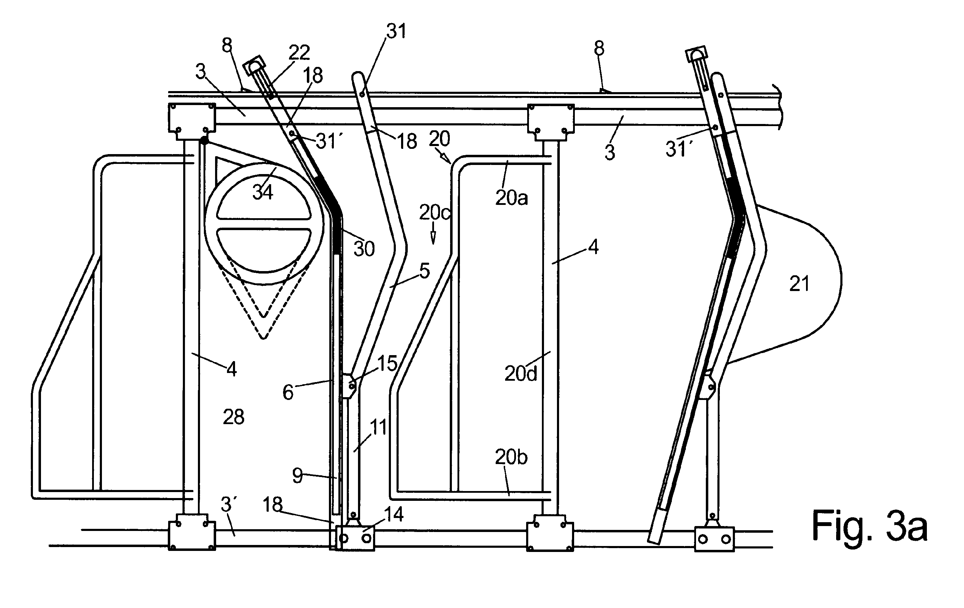

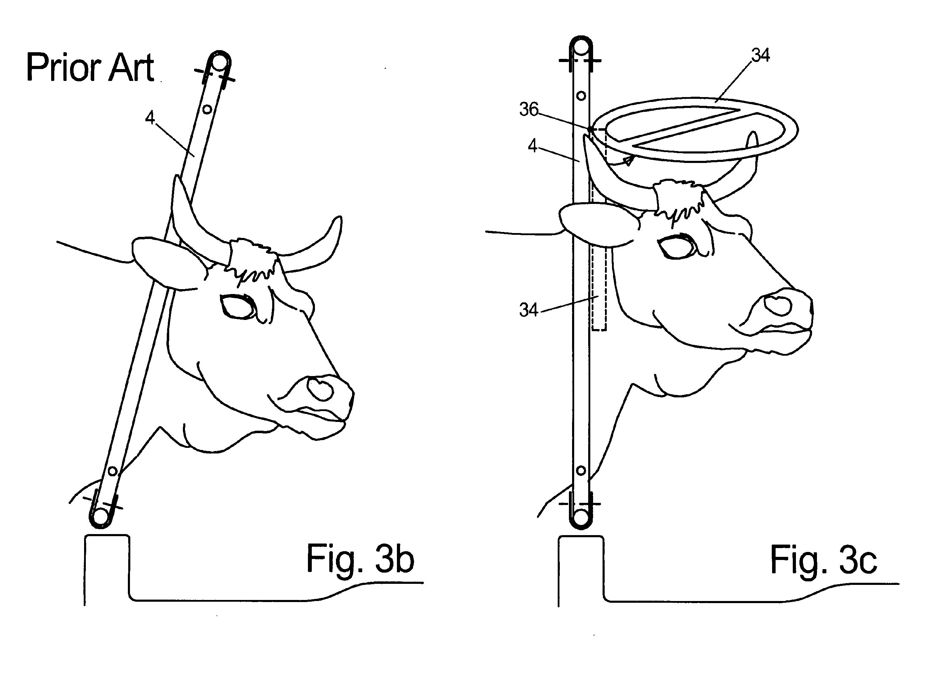

Zu diesem Zweck ist in Figur 3 ein Anschlagteil in Form eines Anschlagringes 34, also eines ringförmig vorzugsweise geschlossenen Rohres, gegebenenfalls mit dem inneren Hohlraum durchlaufender Querstrebe, klappbar an dem vertikalen Festrohr 4 des Gitters, insbesondere dessen oberen Ende oder der Befestigungsmatte am oberen Querrohr 3, so angeordnet, dass es sich in der Ruhestellung im oberen Bereich des Halskanals 28 befindet und dessen obere Hälfte etwa ausfüllt.

In dieser Ruhestellung befindet sich der Anschlagring 34 - wie in Figur 3c in Blickrichtung der Hauptebene des Gitters in gestrichelten Linien dargestellt - in der Hauptebene des Gitters oder parallel dazu versetzt.

Wenn die Kuh den Hals schnell nach oben bewegt, stößt sie somit an das untere Ende des Anschlagringes 34, welches auch V-förmig ausgestaltet sein kann, wie in Figur 3a angedeutet.

Bewegt die Kuh den Hals dagegen langsam nach oben, so wird sie sehr schnell lernen, dass vor allem mit einer leichten zusätzlichen Vorwärtsbewegung der Anschlagring 34 sehr leicht um sein Gelenk 35 herum aus dem Bereich des Halskanals herausgeklappt werden kann, nämlich zur Seite oder schräg nach oben, wie in Figur 3c dargestellt, je nach Ausbildung des Gelenkes 36.

Das Gelenk 36 spannt den Anschlagring 34 mittels einer integrierten Feder in die Ruhestellung, also in den Halskanal 28 hinein, vor.

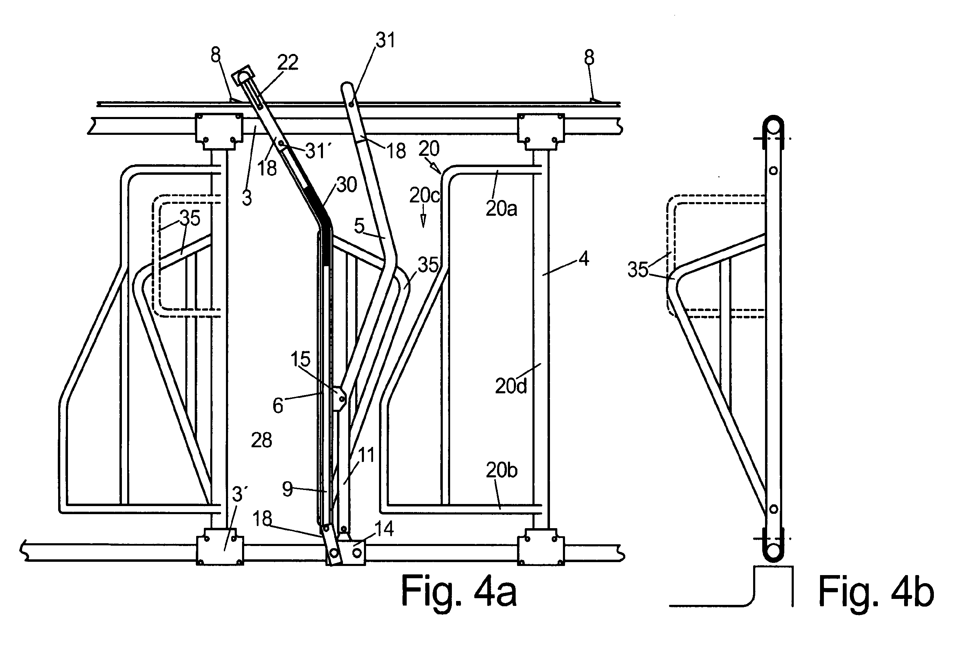

Figur 4a, b zeigt als Alternative hierzu ein Anschlagteil in Form eines etwa V-förmigen oder auch (gestrichelt) alternativ U-förmigen Anschlagbügels 35, insbesondere mit stumpfem Innenwinkel, die beidseits des Halskanals einmal am vertikalen Festrohr 4 und einmal am vertikalen Teil des Fangrohres 6 (die U-förmige Variante wurde dort aus Übersichtlichkeitsgründen nicht eingereicht) befestigt sein können und aus der Hauptebene des Gitters abragen in Richtung Futterkrippe und zwar vorzugsweise im rechten Winkel zur Hauptebene des Gitters, wie in Figur 4b in Blickrichtung des Gitters dargestellt.

Hält die Kuh, die sich mit ihrem Hals im Gitter eingefangen befindet, den Kopf tief, liegt das breite obere Ende des Kopfes mit Hörnern und Ohren unterhalb des nach vorne abstrebenden Unterzuges dieses Anschlagbügels 35.

Bewegt sie den Kopf dagegen schnell nach oben, so stößt sie mit der Oberseite des Kopfes und vor allem mit den Ohren gegen diesen Unterzug des Anschlagbügels 35, da die beiden Anschlagbügel 35 zueinander einen Abstand entsprechend der Breite des Halskanals 28 besitzen, welcher zwar breiter als der Hals ist, jedoch schmaler als der Kopf und damit auch der Oberseite des Kopfes.

Die beiden Anschlagbügel 35 können in dieser in Figur 4b dargestellten Stellung fest montiert sein oder auch verschwenkbar, so dass ihr vorderster Punkt um das sie tragende vertikale Rohr 4 bzw. 6 herum nach außen geschwenkt werden kann, also vom Halskanal 28 weggeschwenkt werden kann, wie in Fig. 4a dargestellt, wodurch es der Kuh ermöglicht wird, durch langsames Hochziehen des Kopfes diese Anschlagbügel 35 zur Seite zu drücken.

Auch hier sind die Anschlagbügel 35 - die auch in der Höhe einstellbar sein können - in die Ruhestellung, in der ihre Bögen zueinander im geringen Abstand entsprechend der Breite des Halskanals 28 stehen, vorgespannt.

Um ein Hindurchstecken eines Körperteiles zu vermeiden, können auch diese Anschlagbügel 35 - wie der Anschlagring 34 - durch ihren inneren Hohlraum hindurch eine den Hohlraum unterteilende Querstrebe aufweisen.

Durch diese Wurf-Verhinderung wird die bisherige Abwehrmaßnahme überflüssig, wie sie in Figur 3b als Stand der Technik dargestellt ist, nämlich die geneigte Montage des gesamten Einsperrgitters mit ihrem oberen Ende nach vorne in Richtung Futtertrog. Diese Maßnahme hat erhebliche Nachteile:

Zum einen müssen gebogene vertikale Tragrohre für die geneigte Montagevariante zur Verfügung gestellt werden. Kann der Freiraum unterhalb des geneigten Gitters, also der Futtertrog, von einer hohen Maschine wie etwa einem Frontlader nicht mehr frei geräumt werden, was somit einen erhöhten Handarbeitsaufwand für das Freiräumen des Futtertroges erfordert.

Falls zur Vereinfachung gerade vertikale Tragrohre verwendet werden, an denen das Einsperrgitter schrägstehend befestigt wird, entstehen dazwischen V-förmige Freiräume, die sehr nachteilig sind, da eine Kuh ihren Fuß hineinstecken und wegen der Verengung nach unten nicht mehr herausziehen kann.

### BEZUGSZEICHENLISTE

- 1: Einsperrgitter
- 2: Rahmen
- 3: oberes Tragrohr
- 3': unteres Tragrohr
- 4: Festrohr
- 5: Basisrohr
- 6: Fangrohr
- 7: Steuerstange
- 8: Nase
- 9: unteres Ende des Fangrohres
- 10: Schwenkgelenk
- 11: unteres Ende des Basisrohres
- 12: Brücke
- 13: Schwenkgelenk
- 14: Rohrstück (Muffe)
- 15: Lagerbock
- 16: Lagerbolzen
- 17: Einzeleinsperrung
- 18, 18': U-Gabel
- 19: U-Gabel
- 20: Sperrbügel
- 21: Schließblech
- 22: Querbolzen
- 23: Langlöcher
- 24: Stutzen
- 26: Trennbügel
- 27: Klemmschraube
- 28: Halskanal
- 29: Standrohr
- 30: Metallstab
- 31: Querbolzen
- 32: Sicherungsbolzen
- 33: Hülse
- 34: Anschlagring
- 35: Anschlagbügel
- 36: Gelenk

## Patentansprüche

1. Einsperrgitter (1), mit
- oberem und unterem horizontalem Tragrohr (3, 3'),
- dazwischen befindlichen vertikalen, fest montierten Festrohren (4),
- einem am unteren Tragrohr (3') schwenkbar gelagerten und mit dem oberen Ende am oberen Tragrohr (3) längsgeführten, wenigstens einfach gekröpften, insbesondere doppelt gekröpften, Basisrohr (5),
- einem auf der Festrohrseite des Basisrohres (5) schwenkbar gelagerten,
vom oberen zum unteren Tragrohr (3, 3') verlaufenden, Fangrohr (6), und
- einer, insbesondere nur einer einzigen, Steuerstange (7) zum Verbringen der Basisrohre (5) von der Offenstellung in die Fang-/Einsperrstellung,
- wobei der Schwenkpunkt des Fangrohres (6) in dessen unterer Hälfte liegt und an der Steuerstange (7) Rastelemente zum Halten des Fangrohres (6) in der Einsperrstellung vorhanden sind,
**dadurch gekennzeichnet, dass**
am Fangrohr (6) ein Zusatzgewicht angeordnet ist in Form eines massiven Metallstabes im Inneren des Fangrohres (6) im Bereich dessen Biegung, welches beim Biegen des Fangrohres (6) mitgebogen wird.

2. Einsperrgitter (1) nach Anspruch 1,
**dadurch gekennzeichnet, dass**
am unteren Ende des Fangrohres (6) eine U-förmige Gabel (18') angeordnet ist, deren freie Schenkel so lang sind, dass sie in jeder Funktionsstellung über das untere Tragrohr (3') greifen.

3. Einsperrgitter (1) nach einem der vorhergehenden Ansprüche,
**dadurch gekennzeichnet, dass**
- auf die freien Enden der U-Gabel (18) des oberen Endes des Fangrohres (6), zwischen denen die Steuerstange (7) läuft, eine Brücke (12) aufgesetzt ist, die das Einfädeln der freien Enden der Gabel in z. B. einen Nasenring verhindert, und insbesondere
- die Brücke (12) von oben auf die freien Enden der Gabel (18) aufgesteckt und dort gesichert ist.

4. Einsperrgitter (1) nach einem der vorhergehenden Ansprüche,
**dadurch gekennzeichnet, dass**
das Schwenkgelenk (13) am unteren Ende des Basisrohres (5) sich im Querschnittsbereich des Basisrohres (5) befindet und insbesondere in einer Bohrung durch das Basisrohr (5) hindurch.

5. Einsperrgitter (1) nach einem der vorhergehenden Ansprüche,
**dadurch gekennzeichnet, dass**
das Schwenkgelenk (10) zwischen Basisrohr (5) und Fangrohr (6) einen U-förmigen Lagerbock (15) umfasst, der mit seinem verbindenden Schenkel an der dem Basisrohr (5) zugewandten Seite des Fangrohres (6) angeschweißt ist und mit seinen freien Enden beidseits das Basisrohr (5) übergreift, wo sich ein Lagerbolzen (16) durch Lagerbock und Basisrohr (5) hindurch erstreckt.

6. Einsperrgitter (1) nach einem der vorhergehenden Ansprüche,
**dadurch gekennzeichnet, dass**
an der Verbindungsstelle zwischen dem oberen Ende des Basisrohres (5) bzw. des Fangrohres (6) und der Steuerstange (7) bzw. dem oberen Tragrohr (3) eine Einzeleinsperrung (17) vorgesehen ist, die es erlaubt, einzelne Fangrohre (6) eines gesamten Gitters in der Einsperrstellung zu halten, während die übrigen durch die Steuerstange (7) in die Offenstellung bewegt werden.

7. Einsperrgitter (1) nach einem der vorhergehenden Ansprüche
**dadurch gekennzeichnet, dass**
- an dem Festrohr (4) ein Sperrbügel (20) befestigt, insbesondere angeschweißt, ist, der parallel versetzt zur Ebene von Basisrohr (5) und Fangrohr (6) in Richtung Fangrohr (6) ragt und in allen Funktionsstellungen des Basisrohres (5) den verbleibenden Freiraum zwischen Basisrohr (5) und Festrohr (4) soweit verkleinert, dass das Hindurchstecken eines Kopfes zuverlässig verhindert wird und sowohl die Freiräume im Sperrbügel (20) als auch zwischen Sperrbügel (20) und Basisrohr (5) eine Form besitzen, die sich von oben nach unten nicht verjüngt, sondern gleich bleibt oder breiter wird, und insbesondere
- der Sperrbügel (20) im wesentlichen U-förmig gestaltet ist, dessen parallel frei endende Schenkel (20a, b) an dem Festrohr (4) verschweißt sind und horizontal verlaufen, während der verbindende dann aufrecht stehende Schenkel (20c) doppelt geköpft ist mit zwei zueinander parallel versetzten Endbereichen und einem schrägen Mittelbereich, der in seiner Neigung etwa der Neigung des mittleren Bereiches des Basisrohres (5) zwischen der Offenstellung und der Einsperr-/Fangstellung entspricht.

8. Einsperrgitter (1) nach Anspruch 7, **dadurch gekennzeichnet, dass**
von dem oberen der beiden Endbereiche dieses aufrecht stehenden Querschenkels (20c) eine zusätzliche Strebe (20d) nach unten zum unteren horizontalen Schenkel des Sperrbügels verläuft und an beiden Enden damit verschweißt ist.

9. Einsperrgitter (1) nach Ansprüche, 5 bis 8 **dadurch gekennzeichnet, dass**
- am Fangrohr (6) abragend in Richtung Basisrohr (5) insbesondere mit dem unteren Ende am Gelenk (10) beginnend ein Schließblech (21), insbesondere auf der dem Trog abgewandten Seite, angeschweißt ist, welches in jeder Funktionsstellung das Basisrohr (5) hintergreift und damit in Richtung quer zur Hauptebene des Gitters den Freiraum zwischen Basisrohr (5) und Fangrohr (6) wenigstens in dem Bereich oberhalb des Gelenkes (10) verschließt, und insbesondere
- das Schließblech (21) seine größte Breite im Bereich der Kröpfung des Fangrohres (6) besitzt.

10. Einsperrgitter (1) nach einem der vorhergehenden Ansprüche,
**dadurch gekennzeichnet, dass**
- an dem Rohrstück (14), welches über das untere Tragrohr (3') geschoben als Lagerbock für das untere Gelenk (13) des Basisrohres (5) dient, eine Befestigung, insbesondere ein nach oben aufragender Stutzen (24), für einen Trennbügel (26) zwischen den einzelnen Boxen des Stalles vorhanden ist, der mit dem anderen Ende im Boden des Stalles verankert ist, und insbesondere
- das Rohrstück (14) soweit verkürzt ist, dass es in seiner Längsrichtung beabstandet gerade noch zwei separate Gewindebohrungen zum Einbringen von Klemmschrauben (27) gegen das Tragrohr (3') aufweist.

11. Einsperrgitter (1) nach einem der vorhergehenden Ansprüche,
**dadurch gekennzeichnet, dass**
an dem Einsperrgitter (1) eine Hochwerf-Verhinderung angeordnet ist in Form wenigstens eines Anschlagteiles (34, 35), welches beweglich am Einsperrgitter (1) befestigt ist und sich in der Ausgangsstellung entweder innerhalb des oberen Bereiches des Halskanals (28) befindet oder unmittelbar neben dem Halskanal (28) aus der Hauptebene des Gitters (1) herausragt zur Seite des Futtertroges hin.

12. Einsperrgitter nach Anspruch 11,
**dadurch gekennzeichnet, dass**
das Anschlagteil ein am Festrohr (4) oder oberen Tragrohr (3) befestigtes Anschlagteil ist, welches im Ausgangszustand in den Halskanal (28) zwischen dem vertikalen Festrohr (4) und dem Fangrohr (6) hineinragt.

13. Einsperrgitter nach Ansprüche, 11 oder 12
**dadurch gekennzeichnet, dass**
das Anschlagteil ein Anschlagring (34) ist, der insbesondere zumindest das obere Drittel des Halskanals, besser die obere Hälfte des Halskanals (28), im Wesentlichen abdeckt.

14. Einsperrgitter nach Ansprüche, 11 bis 13
**dadurch gekennzeichnet, dass**
das Anschlagteil zwei Anschlagbügel (35) sind, von denen je einer mit seinen beiden freien Enden am Festrohr (4) und der andere am Fangrohr (6) befestigt ist, so dass sie in der Ausgangsstellung aus der Hauptebene des Gitters heraus zu derjenigen Seite ragen, auf der sich der Futtertrog befindet.

15. Einsperrgitter nach Ansprüche, 11 bis 14
**dadurch gekennzeichnet, dass**
die Anschlagbügel (35) bezüglich des Halskanals (28) nach außen, also auf größeren Abstand zueinander, verschwenkbar sind und die am Festrohr (4) bzw. Fangrohr (6) haltenden Gelenke in die Ausgangsstellung vorgespannt sind.

## Claims

1. A stanchion (1), comprising:
- an upper and a lower horizontal support tube (3, 3');
- vertical, fixated stationary tubes (4) arranged there between;
- a base tube (5) that is pivotably supported at the lower support tube (3') and longitudinally supported with its upper end at the upper support tube (3), wherein the base tube has at least one elbow, in particular two elbows;
- a catch tube (6) pivotably supported on a stationary tube side of the base tube (5), wherein the catch tube extends from the upper support tube to the lower support tube (3, 3'); and
- a control rod, in particular only a single control rod (7) for moving the base tubes (5) from the open position into the capture- / locking-position,
- wherein the center of gravity of the catch tube (6) is in its lower half and interlocking elements are provided at the control rod (7) for supporting the catch tube (6) in the locking position,
- wherein a ballast weight is arranged at the catch tube (6) and configured as a solid metal rod in the interior of the catch tube (6) in the portion of its bend, wherein the ballast weight is bent together with the catch tube (6).

2. The stanchion according to claim 1, wherein a U-shaped fork (18') is arranged at the lower end of the catch tube (6), wherein the free ends of the fork are long enough so that they reach over the lower support tube (3') in each functional position.

3. The stanchion (1) according to one of the preceding claims,
- wherein a bridge (12) is arranged at the free ends of the U-fork (18) of the upper end of the catch tube (6), wherein the control rod (7) extends between the free ends of the U-fork, wherein the bridge prevents inserting the free ends of the fork e.g. in a nose ring and in particular
- wherein the bridge (12) is placed onto the free ends of the fork (18) and secured.

4. The stanchion (1) according to one of the preceding claims, wherein the pivot link (13) at the lower end of the base tube (5) is arranged in the cross-sectional portion of the base tube (5) and in particular in a bore hole through the base tube (5).

5. The stanchion (1) according to one of the preceding claims, wherein the pivot link (10) includes a U-shaped support (15) between the base tube (5) and the catch tube (6), wherein the support is welded to the side of the catch tube (6) oriented towards the base tube (5) with a joining arm of the support and wherein the support reaches over the base tube (5) on both sides with its free ends where a support bolt (16) extends through the support and the base tube (5).

6. The stanchion (1) according to one of the preceding claims, wherein a singular locking device (17) is provided at the joint between the upper end of the base tube (5) or the catch tube (6) and the control rod (7) or the upper support tube (3), wherein the single locking device facilitates supporting particular catch tubes (6) of an entire stanchion in the locking position, while the other catch tubes are moved into the open position through the control rod (7).

7. The stanchion (1) according to one of the preceding claims,
- wherein a locking bar (20) is attached to the stationary tube (4), in particular welded, wherein the locking bar extends in a direction towards the catch tube (6) and is parallel offset to the plane of base tube (5) and the catch tube (6) and reduces the remaining free space between base tube (5) and stationary tube (4) in all functional positions of the base tube (5) so that a head is reliably prevented from passing through and the free spaces in the locking bar and also the free spaces between the locking bar (20) and the base tube (5) have a shape which does not taper from the top downward but stays the same or becomes broader, and in particular
- wherein the locking bar (20) is essentially U-shaped and its parallel freely terminating arms (20a, b) are welded to the stationary tube (4) and extend horizontally while the connecting vertically standing arm (20c) has two elbows with two end portions that are offset to one another in parallel and a slanted center portion, wherein the slant of the center portion approximately corresponds to the slant of the center portion of the base tube (5) between the open position and the locking- / catch-position.

8. The stanchion (1) according to claim 7, wherein an additional strut (20d) extends downward to the lower horizontal arm of the locking bar from the upper of the two end portions of the vertical extending transversal arm (20c), and wherein the additional strut is welded at both ends to the locking bar.

9. The stanchion (1) according to one of the claims 5 through 8,
- wherein a closing plate is welded to the catch tube (6) so that it protrudes in a direction towards the base tube (5), in particular starting with its lower end at the link (10), in particular on a side oriented away from a trough, wherein the closing plate reaches behind the base tube (5) in any functional position and thus closes the free space between the base tube (5) and the catch tube (6) in a direction transversal to the main plane of the grid, at least in the portion above the link (10) and in particular,
- wherein the closing plate (21) has its largest width in a portion where there is an elbow in the catch tube (6).

10. The stanchion (1) according to one of the preceding claims,
- wherein an attachment, in particular an upward protruding spout (24) for a divider bar (26) between the particular stalls of a stable is provided at the tubular component (14) which is slid over the lower support tube (3') and is used as a support for the lower pivot link (13) of the base tube (5), wherein the spout is anchored with its other end in the base of the stable, and in particular
- wherein the tubular component (14) is shortened so that it includes just two separate threaded boreholes offset in longitudinal direction of the tubular component for inserting clamping bolts (27) acting against the support tube (3').

11. The stanchion (1) according to one of the preceding claims, wherein a throw up preventer is arranged at the stanchion (1), wherein the throw up preventer is configured as at least one contact component (34, 35) which is movably attached at the stanchion and which is arranged in starting position either within the upper portion of the neck channel (28) or directly adjacent to the neck channel (28) protruding out of the main plane of the stanchion towards a side of a feed trough.

12. The stanchion according to claim 11, wherein the contact component is a contact component that is attached to the stationary tube (4) or the upper support tube (3), wherein the contact component protrudes into the neck channel (28) between the vertical stationary tube (4) and the catch tube (6) in an initial condition.

13. The stanchion according to claim 11 or 12, wherein the stop component is a stop ring (34) which substantially covers in particular at least the upper third of the neck channel, better the upper half of the neck channel.

14. The stanchion according to one of the claims 11 through 13, wherein the stop component includes two stop bars (35), wherein one respective stop component is attached with both free ends at the stationary tube (4) and the other one is attached at the catch tube (6), so that they protrude in starting position out of the main plane of the stanchion to a side where the feed trough is arranged.

15. The stanchion according to one of the claims 11 through 14, wherein the stop bars (35) are pivotable in outward direction with respect to the neck channel (28), thus to a bigger distance from one another and the pivot links supporting at the stationary tube (4) or the catch tube (6) are preloaded into the initial position.

## Revendications

1. Cornadis (1), avec
- un tube de support supérieur et inférieur horizontal (3, 3')
- des tubes fixes (4) montés fixement se trouvant entre ces derniers,
- un tube de base (5) coudé au moins simple ou en particulier double, logé pivotant sur le tube support inférieur (3') et guidé longitudinalement par l'extrémité supérieure sur le tube support supérieur (3),
- un tube d'emprisonnement (6) logé pivotant sur la face de tube fixe du tube de base (5) et s'étendant du tube support supérieur au tube support inférieur (3, 3') et
- une tige de commande (7) en particulier unique pour le passage des tubes de base (5) de la position ouverte à la position d'emprisonnement/de blocage,
- le centre de gravité du tube d'emprisonnement (6) se trouvant dans la moitié inférieure du tube et des éléments d'encliquetage étant prévus sur la tige de commande (7) pour le maintien du tube d'emprisonnement (6) en positon de blocage.
**caractérisé en ce qu'**
il est disposé sur le tube d'emprisonnement (6) un poids supplémentaire sous forme d'une barre métallique massive à l'intérieur du tube d'emprisonnement (6) dans la zone de la courbure de ce dernier, le poids étant cintré en même temps que le tube d'emprisonnement (6).

2. Cornadis (1) selon la revendication 1, **caractérisé en ce qu'**il est prévu sur l'extrémité inférieure du tube d'emprisonnement (6) une fourche en forme de U (18') dont la branche libre est suffisamment longue pour passer au-dessus du tube support inférieur (3') dans chaque position fonctionnelle.

3. Cornadis (1) selon l'une des revendications précédentes, **caractérisé en ce que**
- sur les extrémités libres de la fourche en U (18) de l'extrémité supérieure du tube d'emprisonnement (6) entre lesquelles passe la tige de commande (7), il est placé un pont (12) qui empêche l'enfilement des extrémités libres de la fourche dans par exemple un anneau nasal et en particulier
- le pont (12) est placé et fixé par en haut sur les extrémités libres de la fourche (18).

4. Cornadis (1) selon l'une des revendications précédentes,
**caractérisé en ce que**
l'articulation pivotante (13) se trouve sur l'extrémité inférieure du tube de base (5), dans la zone de section transversale du tube de base (5), et en particulier dans un perçage à travers le tube de base (5).

5. Cornadis (1) selon l'une des revendications précédentes,
**caractérisé en ce que**
l'articulation pivotante (10) comprend entre le tube de base (5) et le tube d'emprisonnement (6) un support de palier (15) en forme de U qui est soudé par sa branche de liaison à la face du tube d'emprisonnement (6) opposé au tube de base (5) et recouvre avec ses extrémités libres de part et d'autres le tube de base (5), où un boulon de palier (16) s'étend à travers le support de palier et le tube de base (5).

6. Cornadis (1) selon l'une des revendications précédentes,
**caractérisé en ce qu'**
au point de connexion entre l'extrémité supérieure du tube de base (5) respectivement du tube d'emprisonnement (6) et la tige de commande (7) respectivement du tube support (3), il est prévu un emprisonnement individuel (17) qui permet de maintenir chacun des tubes d'emprisonnement (6) d'une grille complète en position d'emprisonnement, tandis que le reste est déplacé par la tige de commande (7) en position d'ouverture.

7. Cornadis (1) selon l'une des revendications précédentes,
**caractérisé en ce qu'**
- il est fixé sur le tube fixe (4) un étrier de blocage (20) en particulier soudé qui fait saillie en décalé parallèlement par rapport au plan du tube de base (5) et du tube d'emprisonnement (6) en direction du tube d'emprisonnement (6) et diminue dans toutes les positions de fonction du tube de base (5) l'espace libre restant entre le tube de base (5) et le tube fixe (4) de sorte que le passage d'une tête peut être empêché de manière fiable et autant les espaces libres dans l'étrier de blocage (20) qu'entre l'étrier de blocage (20) et le tube de base (5) possèdent une forme qui ne devient pas conique du haut vers le bas mais reste constante ou plus large, en particulier
- l'étrier de blocage (20) est essentiellement en forme de U dont les branches libres parallèles (20a, b) sont soudées sur le tube fixe (4) et s'étendent horizontalement, tandis que la branche (20c) verticale à relier présente un coude double avec deux zones d'extrémité décalées parallèlement entre elles et une zone médiane oblique qui correspond dans son inclinaison à peu près à l'inclinaison de la zone médiane du tube de base (5) entre la position ouverte et la position d'emprisonnement de blocage

8. Cornadis (1) selon la revendication 7, **caractérisé en ce que** zone d'extrémité supérieure de cette branche transversale verticale (20c) s'étend une barrière supplémentaire (20d) vers le bas en direction de la branche horizontale inférieure de l'étrier de blocage et est ainsi soudée aux deux extrémités.

9. Cornadis selon l'une des revendications 5 à 8, **caractérisé en ce que**
- sur le tube d'emprisonnement (6) faisant saillie en direction du tube de base (5), une tôle de fermeture (21) est soudée en particulier avec l'extrémité inférieure en commençant sur l'articulation (10), en particulier sur la face détournée de l'auge, tôle qui agrippe par l'arrière dans chaque position de fonction le tube de base (5) et ainsi ferme, en direction transversalement au plan principal de la grille, l'espace libre entre le tube de base (5) et le tube d'emprisonnement (6) au moins dans la zone au-dessus de l'articulation (10), et en particulier
- la tôle de fermeture (21) possède sa plus grande largeur dans la zone du coude du tube d'emprisonnement (6).

10. Cornadis (1) selon l'une des revendications précédentes, **caractérisé en ce que**
- sur la pièce tubulaire (14) qui est enfilée sur le tube de support inférieur (3') et sert de support de palier pour l'articulation inférieure (13) du tube de base (5), il est prévu une fixation en particulier une tubulure (24) dressée vers le haut pour un étrier de séparation (26) entre chaque boxe de l'étable, qui est ancré par l'autre extrémité dans le sol de l'étable et en particulier,
- la pièce tubulaire (14) est raccourcie de sorte qu'observé dans sa direction longitudinale, elle présente à distance deux perçages filetés séparés pour l'insertion de vis de serrage (27) contre le tube support (3').

11. Cornadis (1) selon l'une des revendications précédentes, **caractérisé en ce que**
- sur le cornadis (1), il est disposé une entrave de lancement sous forme d'au moins une pièce de butée (34, 35) qui est fixée mobile sur le cornadis (1) et qui se trouve en position de sortie soit à l'intérieur de la zone supérieure du canal de cou (28) soit fait saillie juste à côté du canal de cou (28) du plan principal de la grille (1) en direction de l'auge.

12. Cornadis selon la revendication 11, **caractérisé en ce que** la partie de butée est une partie de butée fixée sur le tube fixe (4) ou le tube supérieur de support (3) qui s'engage à l'étant initial dans le canal de cou (28) entre le tube fixe vertical (4) et le tube d'emprisonnement (6).

13. Cornadis selon la revendication 11 ou 12, **caractérisée en ce que** la partie de butée est une bague de butée (34) qui recouvre sensiblement en particulier au moins le tiers supérieur du canal de cou, au mieux la moitié supérieure du canal de cou (28).

14. Cornadis selon l'une des revendications 11 à 13,
**caractérisé en ce que**
la partie de butée est constituée par deux étriers de butée (35) dont l'une est fixée à ses deux extrémités libres sur le tube fixe (4) et l'autre est fixée sur le tube d'emprisonnement (6), de sorte qu'elle fait saillie en position initiale du plan principal de la grille en direction de la face sur laquelle se trouve l'auge.

15. Cornadis selon les revendications 11 à 14, **caractérisé en ce que** les étriers de butée (35) sont pivotants par rapport au canal de cou (28) vers l'extérieur, donc à plus grande distance les uns des autres et les articulations maintenues sur le tube fixe (4) respectivement sur le tube d'emprisonnement (6) sont précontraintes dans la position initiale.
